# EUROPEAN PATENT SPECIFICATION

(11) **EP 3 754 871 B1**
(45) Date of publication and mention of the grant of the patent: **29.11.2023**
(21) Application number: 20170085.3
(22) Date of filing: 13.07.2017
(51) Int. Cl.: H04B 10/548, H04B 10/60

(54) **OPTICAL TRANSMISSION ASSEMBLY**
ANORDNUNG FÜR OPTISCHE ÜBERTRAGUNG
ENSEMBLE DE TRANSMISSION OPTIQUE

(30) Priority: 15.07.2016 CN 201610567478
(43) Date of publication of application: 23.12.2020
(62) Divisional of application: 17181205.0
(73) Proprietor: Huawei Technologies Co., Ltd., Shenzhen, Guangdong 518129 (CN)
(72) Inventor: HU, Rulong, Shenzhen, Guangdong 518129 (CN); LU, Dan, Shenzhen, Guangdong 518129 (CN); CUI, Zhenwei, Shenzhen, Guangdong 518129 (CN); SHUAI, Jialong, Shenzhen, Guangdong 518129 (CN); GAO, Fei, Shenzhen, Guangdong 518129 (CN)
(74) Representative: Pfenning, Meinig & Partner mbB

(56) References cited:
- EP-A2- 2 624 589
- BERIL INAN ET AL: "Realization of a 23.9 Gb/s real time optical-OFDM transmitter with a 1024 point IFFT", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946288, ISBN: 978-1-4577-0213-6

## Description

### TECHNICAL FIELD

The present invention relates to the field of fiber-optic communications, and in particular, to an optical transmission assembly.

### BACKGROUND

With the development of fiber-optic communications technologies, optical fibers have entered various fields of wired communications, such as fields including posts and telecommunications, broadcast communications, electric power communications, petroleum communications, and military communications. In fiber-optic communications, an optical transmission assembly includes an optical transmitter module, an optical receiver module, a wavelength division multiplexer, a wavelength division demultiplexer, a clock and data recovery circuit, and the like. In a conventional optical transmission assembly, 100 gigabits of data can be transmitted per second by using four processing lines, and 25 gigabits of data can be transmitted per second by using each processing line.

In the prior art, four processing lines are configured for an optical transmitter module in an optical transmission assembly. Each processing line includes a driver and a laser. The laser of each processing line has a different light-emitting wavelength. In each processing line, after an electrical signal is transmitted to the driver, the driver amplifies the electrical signal and transmits an amplified electrical signal to the laser. The laser converts the amplified electrical signal to an optical signal and transmits the optical signal to a wavelength division multiplexer. The wavelength division multiplexer couples optical signals in the four processing lines into one optical fiber for sending outside.

There are also four processing lines configured for an optical receiver module in the optical transmission assembly. Each processing line includes a detector and a preamplifier. A wavelength division demultiplexer in the optical transmission assembly divides a received optical signal into four optical signals and transmits the four signals to the four processing lines respectively. The detector in each processing line converts a received optical signal to an electrical signal and transmits the converted-to electrical signal to the preamplifier. The preamplifier amplifies the electrical signal and transmits an amplified electrical signal to a clock and data recovery circuit. The clock and data recovery circuit performs clock and data recovery on the electrical signal amplified by the preamplifier, to obtain a transmitted electrical signal.

The prior art has the following problem:
In the optical transmitter module, each processing line includes a laser, and a spacing between light-emitting wavelengths of lasers in different processing lines is relatively small. As lasers have a relatively strict requirement on temperature, if the temperature changes, a light-emitting wavelength and an optical power of the laser change, affecting data transmission. Therefore, one temperature control device is provided correspondingly for each laser, resulting in relatively high costs of the optical transmission assembly.

EP 2,624,589 A2 discloses a systems and methods for Ethernet Passive Optical Network Over Coaxial (EPOC) power saving modes.

BERILINAN ET AL: "Realization of a 23.9 Gb/s realtime optical-OFDM transmitter with a 1024 point IFFT", 2011 OPTICAL FIBER COMMUNICATION CONFERENCE AND EXPOSITION AND THE NATIONAL FIBER OPTIC ENGINEERS CONFERENCE (OFC/NFOEC 2011): LOS ANGELES, CALIFORNIA, USA, 6 - 10 MARCH 2011, IEEE, PISCATAWAY, NJ, USA, 6 March 2011 (2011-03-06), pages 1-3, ISBN: 978-1-4577-0213-6, reports a FPGA-based real time 23.9-Gb/s CO-OFDM transmitter with IJQ-mixing with a 1024 point FFT.

### SUMMARY

To resolve the problem in the prior art, embodiments of the present invention provide an optical transmission assembly. The technical solution is as follows:
According to a first aspect, an optical transmission assembly is provided, where the optical transmission assembly includes a serializer, a high-order modulation unit, a digital-analog conversion unit, and an optical transmission module, where
the serializer and the high-order modulation unit are electrically connected, the high-order modulation unit and the digital-analog conversion unit are electrically connected, and the digital-analog conversion unit and the optical transmission module are electrically connected;
the optical transmission module includes at least one transmit processing unit and at least one receive processing unit;
the serializer is configured to serially combine every two of multiple electrical signals that are input into the optical transmission assembly, to obtain a serially mixed electrical signal; and is further configured to serially split a serially mixed electrical signal received from the high-order modulation unit, to obtain and output multiple electrical signals; and
the high-order modulation unit is a pulse amplitude modulation four (PAM4) unit.

An optical transmission assembly includes a serializer, a high-order modulation unit, a digital-analog conversion unit, and an optical transmission module. The serializer and the high-order modulation unit are electrically connected. The serializer can serially combine every two of multiple electrical signals that are input into the optical transmission assembly, to obtain a serially mixed electrical signal. In addition, the serializer can serially split a serially mixed electrical signal received from the high-order modulation unit, to obtain multiple electrical signals. The high-order modulation unit and the digital-analog conversion unit are electrically connected. The digital-analog conversion unit can convert a digital electrical signal received from the high-order modulation unit to an analog electrical signal, and can further convert an analog electrical signal received from the optical transmission module to a digital electrical signal. The transmit processing unit can convert an electrical signal received from the digital-analog conversion unit to an optical signal and transmit the optical signal into an optical fiber. The receive processing unit can convert an optical signal received from an optical fiber to an electrical signal and amplify the electrical signal.

With reference to the first aspect, in a first possible implementation of the first aspect, the transmit processing unit includes a driver and a laser; and
the driver is electrically connected to both the digital-analog conversion unit and the laser.

The transmit processing unit includes a driver and a laser. The driver is electrically connected to both the digital-analog conversion unit and the laser.

With reference to the first aspect, in a second possible implementation of the first aspect, the receive processing unit includes a detector and a preamplifier; and
the preamplifier is electrically connected to both the detector and the digital-analog conversion unit.

The receive processing unit includes a detector and a preamplifier. The preamplifier is electrically connected to both the detector and the digital-analog conversion unit. The detector includes a photoelectric diode that can convert a received optical signal to an electrical signal. The preamplifier can amplify an electrical signal received from the detector and transmit an amplified electrical signal to the digital-analog conversion unit.

With reference to the first aspect, in a third possible implementation of the first aspect, the optical transmission assembly further includes a clock and data recovery circuit; and
the clock and data recovery circuit is disposed in a line between the serializer and an electrical-signal transmission port of the optical transmission assembly.

The optical transmission assembly further includes a clock and data recovery circuit. The clock and data recovery circuit may be disposed in a line between the serializer and an electrical-signal transmission port of the optical transmission assembly. The clock and data recovery circuit can insert a clock signal into a to-be-transmitted electrical signal, and can extract a clock signal from a received electrical signal and recover data from the received electrical signal by using the extracted clock signal.

With reference to the first aspect, in a fourth possible implementation of the first aspect, the digital-analog conversion unit is configured to preprocess the serially mixed electrical signal received from the high-order modulation unit and a serially mixed electrical signal received from the receive processing unit, where the preprocessing includes at least pre-emphasis processing, level spacing adjustment, signal balancing processing, non-linear processing, and intercode interference processing.

The digital-analog conversion unit can preprocess the serially mixed electrical signal received from the high-order modulation unit, and can further preprocess a serially mixed electrical signal received from the receive processing unit. Because a spacing between four levels may change during transmission, the digital-analog conversion unit may decrease a relatively wide level spacing of the serially mixed electrical signal and may increase a relatively narrow level spacing. The digital-analog conversion unit may perform pre-emphasis processing and the like on the serially mixed electrical signal received from the high-order modulation unit.

With reference to the first aspect, in a fifth possible implementation of the first aspect, the optical transmission assembly includes at least one optical input/output port and at least one optical splitting apparatus;
a quantity of the optical splitting apparatuses and quantities of the optical input/output ports, the transmit processing units, and the receive processing units are equal;
the optical splitting apparatus includes a first port, a second port, and a third port; and
the optical splitting apparatus is configured to transmit, to the optical input/output port by using the second port, an optical signal output by the transmit processing unit and received by the first port; and is further configured to transmit, to the receive processing unit by using the third port, an optical signal transmitted by the optical input/output port and received by the second port.

The optical splitting apparatus may include a 45-degree filter. The optical splitting apparatus can transmit, to the optical input/output port by using a second port, an optical signal output by the transmit processing unit and received by a first port. In addition, the optical splitting apparatus can transmit, to the receive processing unit by using a third port, an optical signal transmitted by the optical input/output port and received by the second port. That is, the 45-degree filter can reflect, to the third port, all optical signals transmitted by the optical input/output port and received by the second port, and transmit the optical signals to the receive processing unit via the third port. Therefore, by using the optical splitting apparatus, the optical transmission assembly can simultaneously transmit an optical signal to an optical fiber and receive an optical signal transmitted by the optical fiber. A wavelength of the optical signal transmitted to the optical fiber is not equal to a wavelength of the received optical signal transmitted by the optical fiber.

With reference to the fifth possible implementation of the first aspect, in a sixth possible implementation of the first aspect, the quantity of the transmit processing units and the quantity of the receive processing units in the optical transmission module are both 2.

With reference to the sixth possible implementation of the first aspect, in a seventh possible implementation of the first aspect, the optical transmission module includes a first transmit processing unit, a second transmit processing unit, a first receive processing unit, and a second receive processing unit;
the first transmit processing unit is configured to transmit an optical signal of a first preset wavelength, and the first receive processing unit is configured to receive an optical signal of a second preset wavelength; and
the second transmit processing unit is configured to transmit the optical signal of the second preset wavelength, and the second receive processing unit is configured to receive the optical signal of the first preset wavelength.

The optical transmission module may include a first transmit processing unit, a second transmit processing unit, a first receive processing unit, and a second receive processing unit. The first transmit processing unit and the first receive processing unit share one optical input/output port. The second transmit processing unit and the second receive processing unit also share one optical input/output port.

With reference to the seventh possible implementation of the first aspect, in an eighth possible implementation of the first aspect, the first preset wavelength is 1270 nanometers and the second preset wavelength is 1330 nanometers.

With reference to the fifth possible implementation of the first aspect, in a ninth possible implementation of the first aspect, the optical transmission assembly further includes at least one filter;
a quantity of the filters is equal to the quantity of the receive processing units; and the filter is disposed at an optical input port of the receive processing unit.

The optical transmission assembly further includes at least one filter. A quantity of the filters is equal to the quantity of the receive processing units. One receive processing unit corresponds to one filter. The filter may be disposed at an optical input port of the receive processing unit, and may be specifically disposed in a lens cap. The filter may allow only a wavelength corresponding to an optical signal that the receive processing unit needs to receive to pass through.

With reference to the fifth possible implementation of the first aspect, in a tenth possible implementation of the first aspect, at least one convex lens is further disposed in an optical path between the transmit processing unit and the optical splitting apparatus, and a wavelength of the at least one convex lens is equal to a wavelength of an optical signal transmitted by the transmit processing unit; and
at least one convex lens is further disposed in an optical path between the receive processing unit and the optical input/output port, and a wavelength of the at least one convex lens is equal to a wavelength of an optical signal received by the receive processing unit.

The at least one convex lens is configured to focus an optical signal to optimize a flare of the optical signal. In regard to the at least one convex lens further disposed in an optical path between the transmit processing unit and the optical splitting apparatus, a wavelength of the at least one convex lens is equal to a wavelength of an optical signal transmitted by the transmit processing unit, and the at least one convex lens may be one convex lens or may be two convex lenses (relay lenses). In regard to the at least one convex lens further disposed in an optical path between the receive processing unit and the optical input/output port, a wavelength of the at least one convex lens is equal to a wavelength of an optical signal received by the receive processing unit, and the at least one convex lens may be one convex lens or may be three convex lenses (one convex lens and two relay lenses).

The technical solution provided by the embodiments of the present invention brings about the following beneficial effects:

In the embodiments of the present invention, an optical transmission assembly includes a serializer, a high-order modulation unit, a digital-analog conversion unit, and an optical transmission module. In the optical transmission assembly, because a serializer and a high-order modulation unit are configured, the serializer can serially combine any two electrical signals to obtain a serially mixed electrical signal, and the high-order modulation unit can modulate a high-and-low-level signal to a four-level signal. Therefore, compared with the prior art, to transmit a same volume of data, only at least half lasers may be used, and further, only at least half temperature control devices are used. In this way, costs of an optical transmission assembly are reduced for transmission of a same volume of data.

### BRIEF DESCRIPTION OF DRAWINGS

The accompanying drawings herein are incorporated into the specification and constitute a part of the specification. The accompanying drawings illustrate embodiments that comply with this disclosure, and are used together with the specification to explain principles of this disclosure. In the accompanying drawings:
FIG. 1 is a schematic structural diagram of an optical transmission assembly according to an embodiment helpful for disclosing the invention.
FIG. 2 is a schematic structural diagram of an optical transmission assembly according to an embodiment helpful for disclosing the invention.
FIG. 3 is a schematic structural diagram of an optical transmission assembly according to an embodiment helpful for disclosing the invention.
FIG. 4 is a schematic structural diagram of an optical transmission assembly according to an embodiment helpful for disclosing the invention.
FIG. 5 is a schematic structural diagram of an optical transmission assembly according to an embodiment of the present invention; and
FIG. 6 is a schematic structural diagram of an optical transmission assembly according to an embodiment of the present invention.

Embodiments specified in this disclosure have been shown by using the accompanying drawings, and more detailed descriptions are to be provided later. These accompanying drawings and text descriptions are intended not to limit the scope of the idea of this disclosure in any manner, but to explain, by referring to specific embodiments, the idea of this disclosure to persons skilled in the art.

**Reference numerals:**

| | | | |
|---|---|---|---|
| 1 | Serializer | 2 | High-order modulation unit |
| 3 | Digital-analog conversion unit | 4 | Optical transmission module |
| 41 | Transmit processing unit | 42 | Receive processing unit |
| 5 | Clock and data recovery circuit | 6 | Optical input/output port |
| 7 | Optical splitting apparatus | 71 | First port |
| 72 | Second port | 8 | Filter |
| 9 | Convex lens | 73 | Third port |
| 411 | Driver | 412 | Laser |
| 421 | Detector | 422 | Preamplifier |

### DESCRIPTION OF EMBODIMENTS

To make the objectives, technical solutions, and advantages of the present invention clearer, the following further describes the embodiments of the present invention in detail with reference to the accompanying drawings.

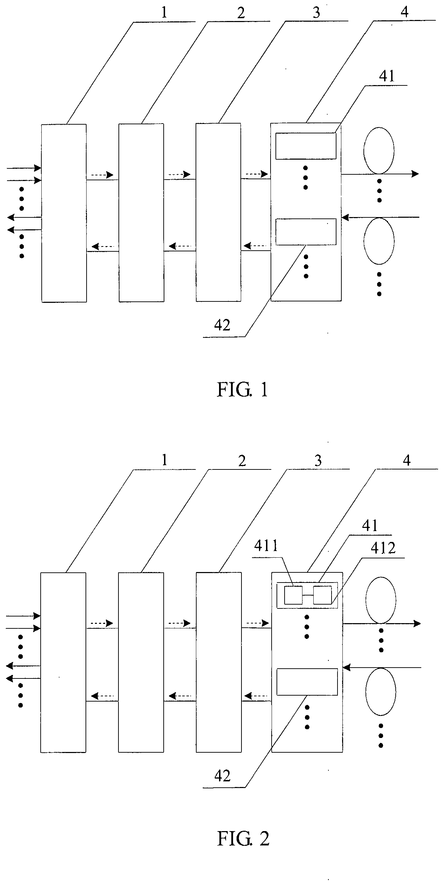

The embodiments of the present invention provide an optical transmission assembly. As shown in FIG. 1, the optical transmission assembly includes a serializer 1, a high-order modulation unit 2, a digital-analog conversion unit 3, and an optical transmission module 4. The serializer 1 and the high-order modulation unit 2 are electrically connected. The high-order modulation unit 2 and the digital-analog conversion unit 3 are electrically connected. The digital-analog conversion unit 3 and the optical transmission module 4 are electrically connected. The optical transmission module 4 includes at least one transmit processing unit 41 and at least one receive processing unit 42. The serializer 1 is configured to serially combine every two of multiple electrical signals that are input into the optical transmission assembly, to obtain a serially mixed electrical signal; and is further configured to serially split a serially mixed electrical signal received from the high-order modulation unit 2, to obtain and output multiple electrical signals.

In practice, the optical transmission assembly includes a serializer 1, a high-order modulation unit 2, a digital-analog conversion unit 3, and an optical transmission module 4. The serializer 1 and the high-order modulation unit 2 are electrically connected. The serializer 1 can serially combine every two of multiple electrical signals that are input into the optical transmission assembly, to obtain a serially mixed electrical signal. For example, four electrical signals (each electrical signal is 25 Gbps) are input into the optical transmission assembly. The serializer 1 can serially combine every two of the four electrical signals to obtain two serially mixed electrical signals (each serially mixed electrical signal is 50 Gbps). In addition, the serializer 1 can further serially split a serially mixed electrical signal received from the high-order modulation unit 2, to obtain multiple electrical signals. For example, two serially mixed electrical signals received from the high-order modulation unit 2 are 50 Gbps. The serializer 1 can serially split the two serially mixed electrical signals into four electrical signals, with each electrical signal being 25 Gbps.

The high-order modulation unit 2 can modulate a serially mixed electrical signal received from the serializer 1 and output a modulated serially mixed electrical signal to the digital-analog conversion unit 3, and can further demodulate a modulated serially mixed electrical signal received from the digital-analog conversion unit 3, to obtain a serially mixed electrical signal and output the obtained serially mixed electrical signal to the serializer 1. The high-order modulation unit 2 is a PAM4 (Pulse Amplitude Modulation Four) unit. PAM4 is time domain modulation.

The PAM4 unit can convert a serially mixed electrical signal received from the serializer 1 from a high-and-low-level signal to a four-level signal (for example, convert 50 Gbps electrical signals to electrical signals of a 25 Gbps baud rate), that is, converting two level signals to four level signals, and input the four-level signal into the digital-analog conversion unit 3. The PAM4 unit can further convert a four-level electrical signal received from the digital-analog conversion unit 3 to a high-and-low-level electrical signal, that is, converting four level signals to two level signals, and input the high-and-low-level signal into the serializer 1.

The digital-analog conversion unit 3 and the optical transmission module 4 are electrically connected. The digital-analog conversion unit 3 can convert a digital electrical signal received from the high-order modulation unit 2 to an analog electrical signal, and can further convert an analog electrical signal received from the optical transmission module 4 to a digital electrical signal (herein, the digital-analog conversion unit 3 that receives the analog electrical signal from the optical transmission module 4 may be referred to as an analog-to-digital conversion unit). The transmit processing unit 41 can convert an electrical signal received from the digital-analog conversion unit 3 to an optical signal and transmit the optical signal into an optical fiber. The receive processing unit 42 can convert an optical signal received from an optical fiber to an electrical signal, amplify the electrical signal (because the received optical signal is relatively weak, the electrical signal that the optical signal is converted to is also relatively weak; for this reason, the electrical signal is amplified), and transmit an amplified electrical signal to the digital-analog conversion unit 3.

Optionally, as shown in FIG. 2, the transmit processing unit 41 includes a driver 411 and a laser 412. The driver 411 is electrically connected to both the digital-analog conversion unit 3 and the laser 412.

In practice, the transmit processing unit 41 includes a driver 411 and a laser 412. The driver 411 is electrically connected to both the digital-analog conversion unit 3 and the laser 412. The driver 411 can linearly amplify a four-level electrical signal received from the digital-analog conversion unit 3, and input a linearly amplified four-level electrical signal into the laser 412, to drive the laser 412. The laser 412 can convert the linearly amplified four-level electrical signal to an optical signal and transmit the optical signal into an optical fiber.

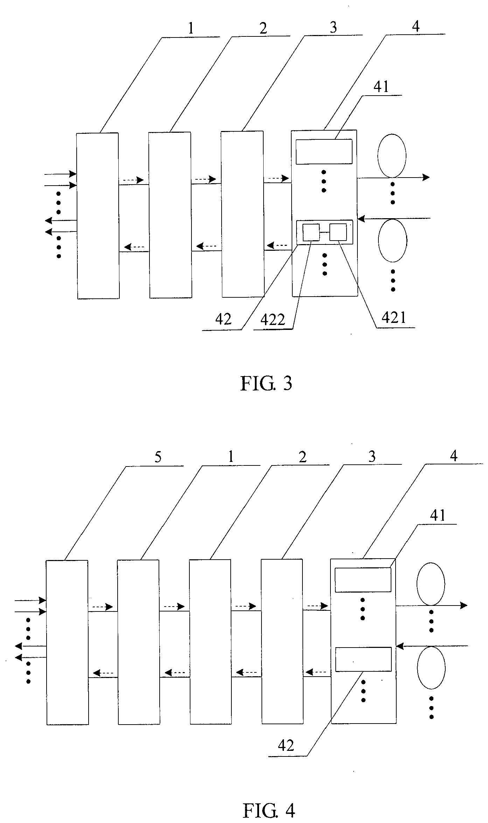

Optionally, as shown in FIG. 3, the receive processing unit 42 includes a detector 421 and a preamplifier 422. The preamplifier 422 is electrically connected to both the detector 421 and the digital-analog conversion unit 3.

The digital-analog conversion unit 3 connected to the receive processing unit 42 may be referred to as an analog-to-digital conversion unit.

In practice, the receive processing unit 42 includes a detector 421 and a preamplifier 422. The preamplifier 422 is electrically connected to both the detector 421 and the digital-analog conversion unit 3. The detector 421 includes a photoelectric diode that can convert a received optical signal to an electrical signal. The preamplifier 422 can amplify an electrical signal received from the detector 421 and transmit an amplified electrical signal to an analog-to-digital conversion unit.

Optionally, as shown in FIG. 4, the optical transmission assembly further includes a clock and data recovery circuit 5. The clock and data recovery circuit 5 is disposed in a line between the serializer 1 and an electrical-signal transmission port of the optical transmission assembly.

In practice, the optical transmission assembly further includes a clock and data recovery circuit 5. The clock and data recovery circuit 5 may be disposed in a line between the serializer 1 and an electrical-signal transmission port of the optical transmission assembly. The clock and data recovery circuit 5 can extract a clock signal from a received electrical signal and recover data from the received electrical signal by using the extracted clock signal.

Optionally, the digital-analog conversion unit 3 is configured to preprocess the serially mixed electrical signal received from the high-order modulation unit 2 and a serially mixed electrical signal received from the receive processing unit 42. The preprocessing includes at least pre-emphasis processing, level spacing adjustment, signal balancing processing, non-linear processing, and intercode interference processing.

In practice, the digital-analog conversion unit 3 can preprocess the serially mixed electrical signal received from the high-order modulation unit 2, and the digital-analog conversion unit 3 can further preprocess a serially mixed electrical signal received from the receive processing unit 42. The preprocessing may be pre-emphasis processing, level spacing adjustment, intercode interference processing, non-linear processing, signal balancing, and the like. For example, the digital-analog conversion unit 3 may perform pre-emphasis processing on a serially mixed electrical signal received from the high-order modulation unit 2, may further perform level spacing adjustment on the serially mixed electrical signal received from the high-order modulation unit 2, and may further perform level spacing adjustment on a serially mixed electrical signal received from the receive processing unit 42. The serially mixed electrical signal is of four levels. Because a spacing between the four levels may change during transmission, the digital-analog conversion unit 3 may decrease a relatively wide spacing of the serially mixed electrical signal and may increase a relatively narrow level spacing. The digital-analog conversion unit 3 may further perform signal balancing processing, non-linear processing, intercode interference processing, and the like on the serially mixed electrical signal received from the high-order modulation unit 2 and the serially mixed electrical signal received from the receive processing unit 42, so as to reduce a bit error rate.

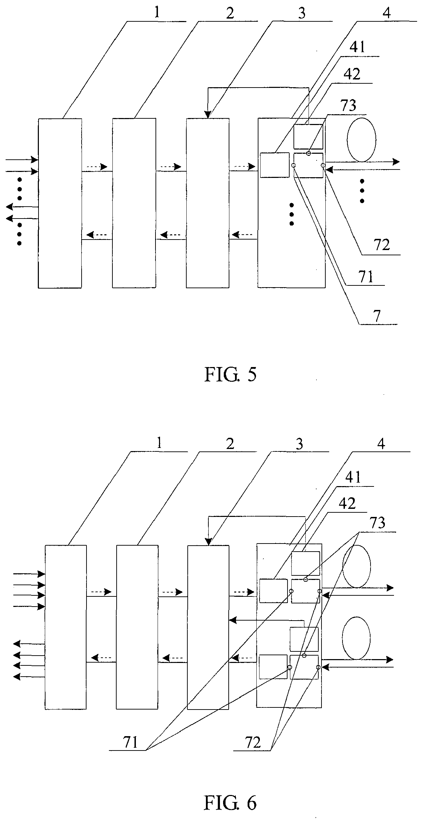

Optionally, as shown in FIG. 5, the optical transmission assembly includes at least one optical input/output port 6 and at least one optical splitting apparatus 7.

A quantity of the optical splitting apparatuses 7 and quantities of the optical input/output ports 6, the transmit processing units 41, and the receive processing units 42 are equal.

The optical splitting apparatus 7 includes a first port 71, a second port 72, and a third port 73.

The optical splitting apparatus 7 is configured to transmit, to the optical input/output port 6 by using the second port 72, an optical signal output by the transmit processing unit 41 and received by the first port 71; and is further configured to transmit, to the receive processing unit 42 by using the third port 73, an optical signal transmitted by the optical input/output port 6 and received by the second port 72.

In practice, the optical transmission assembly includes at least one optical input/output port 6 and at least one optical splitting apparatus 7. The optical input/output port 6 can simultaneously receive an optical signal and transmit an optical signal. A quantity of the optical splitting apparatuses 7 and quantities of the optical input/output ports 6, the transmit processing units 41, and the receive processing units 42 are equal. That is, one optical splitting apparatus 7 corresponds to one optical input/output port 6, one transmit processing unit 41, and one receive processing unit 42.

The optical splitting apparatus 7 may include a 45-degree filter. The optical splitting apparatus 7 can transmit, to the optical input/output port 6 by using a second port 72, an optical signal output by the transmit processing unit 41 and received by a first port 71. The optical splitting apparatus 7 can also transmit, to the receive processing unit 42 by using a third port 73, an optical signal transmitted by the optical input/output port 6 and received by the second port 72. That is, the 45-degree filter can reflect, to the third port 73, all optical signals transmitted by the optical input/output port 6 and received by the second port 72, and transmit the optical signals to the receive processing unit via the third port 73. Therefore, by using the optical splitting apparatus 7, the optical transmission assembly can simultaneously transmit an optical signal to an optical fiber and receive an optical signal transmitted by the optical fiber. A wavelength of the optical signal transmitted by the optical transmission assembly to the optical fiber is not equal to a wavelength of the optical signal received by the optical transmission assembly and transmitted by the optical fiber.

Optionally, as shown in FIG. 6, the quantity of the transmit processing units 41 and the quantity of the receive processing units 42 in the optical transmission module 4 are both 2.

In practice, a quantity of the transmit processing units 41 and a quantity of the receive processing units 42 in the optical transmission module 4 may both be 2. Similarly, there are two optical input/output ports 6. For example, four electrical signals are input into the optical transmission assembly. Each electrical signal is 25 Gbps. Each optical input/output port transmits optical signals that two electrical signals are converted to, each equivalent to a baud rate of 25 Gbps. At the same time, each optical input/output port receives two optical signals, where each optical signal is equivalent to a baud rate of 25 Gbps. Therefore, one optical input/output port can simultaneously transmit and receive data at a baud rate of 25 Gbps, and two optical input/output ports can simultaneously transmit and receive data at a baud rate of 50 Gbps.

Optionally, as shown in FIG. 6, the optical transmission module 4 includes a first transmit processing unit 41, a second transmit processing unit 41, a first receive processing unit 42, and a second receive processing unit 42.

The first transmit processing unit 41 is configured to transmit an optical signal of a first preset wavelength. The first receive processing unit 42 is configured to receive an optical signal of a second preset wavelength.

The second transmit processing unit 41 is configured to transmit the optical signal of the second preset wavelength. The second receive processing unit 42 is configured to receive the optical signal of the first preset wavelength.

In practice, the optical transmission module 4 may include a first transmit processing unit 41, a second transmit processing unit 41, a first receive processing unit 42, and a second receive processing unit 42. The first transmit processing unit 41 and the first receive processing unit 42 share one optical input/output port 6. The second transmit processing unit 41 and the second receive processing unit 42 also share one optical input/output port 6.

The first transmit processing unit 41 can transmit an optical signal of a first preset wavelength. That is, a light-emitting wavelength of a laser in the first transmit processing unit 41 is the first preset wavelength. The first receive processing unit 42 can receive an optical signal of a second preset wavelength. That is, a detector in the first receive processing unit 42 can convert the optical signal of the second preset wavelength to an electrical signal.

The second transmit processing unit 41 can transmit the optical signal of the second preset wavelength. That is, a light-emitting wavelength of a laser in the second transmit processing unit 41 is the second preset wavelength. The second receive processing unit 42 can receive the optical signal of the first preset wavelength. That is, a detector in the second receive processing unit 42 can convert the optical signal of the first preset wavelength to an electrical signal.

For example, the first preset wavelength is 1270 nanometers and the second preset wavelength is 1330 nanometers. The first transmit processing unit 41 can receive an optical signal whose wavelength is 1330 nanometers at the same time when transmitting an optical signal whose wavelength is 1270 nanometers. Similarly, the second transmit processing unit 41 can receive an optical signal whose wavelength is 1270 nanometers at the same time when transmitting an optical signal whose wavelength is 1330 nanometers.

Optionally, the first preset wavelength is 1270 nanometers and the second preset wavelength is 1330 nanometers.

In practice, two wavelengths in a band 0 may be selected as the light-emitting wavelength of the laser in the first transmit processing unit 41 and the light-emitting wavelength of the laser in the second transmit processing unit 41. The first preset wavelength may be 1270 nanometers, and the second preset wavelength may be 1330 nanometers. In this way, both a transmission distance and a filter cost may be ensured, and the wavelengths do not affect each other because of a wide gap between the wavelengths.

Optionally, the optical transmission assembly further includes at least one filter.

A quantity of the filters is equal to the quantity of the receive processing units.

The filter is disposed at an optical input port of the receive processing unit.

In practice, the optical transmission assembly further includes at least one filter 8 (for example, at least one 0-degree filter). A quantity of the filters 8 is equal to the quantity of the receive processing units 42. One receive processing unit 42 corresponds to one filter 8. The filter 8 may be disposed at an optical input port of the receive processing unit 42, and may be specifically disposed in a lens cap. The filter 8 may allow only a wavelength corresponding to an optical signal that the receive processing unit 42 needs to receive to pass through. For example, the filter is a 0-degree filter, and a wavelength of an optical signal that the receive processing unit 42 needs to receive is 1270 nanometers. In this case, the 0-degree filter 8 at the optical input port of the receive processing unit 42 allows only an optical signal whose wavelength is 1270 nanometers to pass through and filters out all optical signals of other wavelengths.

Optionally, at least one convex lens 9 is further disposed in an optical path between the transmit processing unit 41 and the optical splitting apparatus 7. A wavelength of the at least one convex lens 9 is equal to a wavelength of an optical signal transmitted by the transmit processing unit 41.

At least one convex lens 10 is further disposed in an optical path between the receive processing unit 42 and the optical input/output port 6. A wavelength of the at least one convex lens 10 is equal to a wavelength of an optical signal received by the receive processing unit 42.

In practice, at least one convex lens 9 is further disposed in an optical path between the transmit processing unit 41 and the optical splitting apparatus 7, and a wavelength of the at least one convex lens 9 is equal to a light-emitting wavelength of the laser in the transmit processing unit 41. The at least one convex lens may be configured to focus an optical signal output by the transmit processing unit 41, so that a flare size of the optical signal exactly fits an input port of an optical fiber when the optical signal output by the transmit processing unit 41 is transmitted to the input port of the optical fiber. Because a distance between the transmit processing unit 41 and the optical input/output port 6 is relatively long, the convex lens may be configured as a convex lens of a large focal length if there is only one convex lens in the optical path between the transmit processing unit 41 and the optical input/output port 6. Alternatively, two convex lenses (which may be referred to as relay lenses) may be further disposed in the optical path between the transmit processing unit 41 and the optical splitting apparatus 7.

At least one convex lens 10 may be further disposed in an optical path between the receive processing unit 42 and the optical input/output port 6. A wavelength of the at least one convex lens 10 is equal to a wavelength of an optical signal received by the receive processing unit 42, that is, equal to a wavelength that can be detected by the detector in the receive processing unit 42. The at least one convex lens 10 may be configured to focus an optical signal received from the optical input/output port 6, so that a flare size of an optical signal transmitted to the receive processing unit 42 exactly fits the detector in the receive processing unit 42. The at least one convex lens may be one convex lens and may be disposed at an optical transmission port of the receive processing unit 42. Because a distance between the optical transmission port of the receive processing unit 42 and the detector in the receive processing unit is relatively short, the one convex lens may be a lens of a small focal length. The at least one lens may be three convex lenses. In addition to one convex lens disposed at an optical transmission port of the receive processing unit 42, two convex lenses (which may be referred to as relay lenses) may be further disposed in an optical path between the optical splitting apparatus 7 and the optical input/output port 6.

In actual use of the foregoing convex lens, a convex lens of an appropriate focal length is selected according to an actual focus requirement of an optical signal. This is not limited herein.

In the embodiments of the present invention, an optical transmission assembly includes a serializer, a high-order modulation unit, a digital-analog conversion unit, and an optical transmission module. In the optical transmission assembly, because a serializer and a high-order modulation unit are configured, the serializer can serially combine any two electrical signals to obtain a serially mixed electrical signal, and the high-order modulation unit can modulate a high-and-low-level signal to a four-level signal. Therefore, compared with the prior art, to transmit a same volume of data, only at least half lasers may be used, and further, only at least half temperature control devices are used. In this way, costs of an optical transmission assembly are reduced for transmission of a same volume of data.

Persons of ordinary skill in the art may understand that all or some of the steps of the embodiments may be implemented by using hardware or a program instructing related hardware. The program may be stored in a computer-readable storage medium. The storage medium may be a read-only memory, a magnetic disk, an optical disc, or the like.

## Claims

1. An optical transceiver assembly, comprising:
a serializer (1);
a high-order modulation unit (2) coupled to the serializer (1), wherein the high-order modulation unit (2) is a pulse amplitude modulation four, PAM4, unit;
a digital-analog conversion unit (3) coupled to the high-order modulation unit; and
a optical transceiver module (4) comprises a transmit processing unit (41), a receive processing unit (42) and an optical splitting apparatus (7), wherein the transmit processing unit (41) and the receive processing unit (42) are respectively coupled to the digital-analog conversion unit (3), and the optical splitting apparatus (7) is configured to transmit a first optical signal output by the transmit processing unit (41), and receive a second optical signal and transmit the second optical signal to the receive processing unit (42).

2. The optical transceiver assembly according to claim 1, wherein the transmit processing unit (41) comprises a driver (411) and a laser (412); and
the driver (411) is electrically connected to both the digital-analog conversion unit (3) and the laser (412).

3. The optical transceiver assembly according to claim 1 or 2, wherein the receive processing unit (42) comprises a detector (421) and a preamplifier (422); and
the preamplifier (422) is electrically connected to both the detector (421) and the digital-analog conversion unit (3).

4. The optical transceiver assembly according to any one of claims 1 to 3, wherein the optical transceiver assembly further comprises a clock and data recovery circuit (5); and
the clock and data recovery circuit (5) is disposed in a line between the serializer (1) and an electrical-signal transmission port of the optical transceiver assembly.

5. The optical transceiver assembly according to any one of claims 1 to 4, wherein the digital-analog conversion unit (3) is configured to preprocess the serially mixed electrical signal received from the high-order modulation unit (2) and a serially mixed electrical signal received from the receive processing unit (42), wherein the preprocessing comprises at least pre-emphasis processing, level spacing adjustment, signal balancing processing, non-linear processing, and intercode interference processing.

6. The optical transceiver assembly according to any one of claims 1 to 5, wherein the optical transceiver assembly further comprises an optical input/output port;
the optical splitting apparatus (7) comprises a first port (71), a second port (72), and a third port (73); and
the optical splitting apparatus (7) is configured to transmit the first optical signal received by the first port (71) to the optical input/output port by using the second port (72) and; and is further configured to transmit, to the receive processing unit (42) by using the third port (73), the second optical signal transmitted by the optical input/output port and received by the second port (72).

7. The optical transceiver assembly according to claim 6, wherein the quantity of the transmit processing units (41) and the quantity of the receive processing units (42) in the optical transceiver module are both 2.

8. The optical transceiver assembly according to claim 7, wherein the optical transceiver module (4) comprises a first transmit processing unit (41), a second transmit processing unit (41), a first receive processing unit (42), and a second receive processing unit (42);
the first transmit processing unit (41) is configured to transmit an optical signal of a first preset wavelength;
the first receive processing unit (42) is configured to receive an optical signal of a second preset wavelength;
the second transmit processing unit (41) is configured to transmit the optical signal of the second preset wavelength; and
the second receive processing unit (42) is configured to receive the optical signal of the first preset wavelength.

9. The optical transceiver assembly according to claim 8, wherein the first preset wavelength is 1270 nanometers and the second preset wavelength is 1330 nanometers.

10. The optical transceiver assembly according to claim 6, wherein the optical transceiver assembly further comprises a filter;
wherein the filter is disposed at an optical input port of the receive processing unit (42).

11. The optical transceiver assembly according to claim 6, wherein at least one first convex lens (9) is further disposed in an optical path between the transmit processing unit (41) and the optical splitting apparatus, and a wavelength of the at least one first convex lens (9) is equal to a wavelength of an optical signal transmitted by the transmit processing unit (41); and
at least one second convex lens (10) is further disposed in an optical path between the receive processing unit (42) and the optical input/output port, and a wavelength of the at least one second convex lens (10) is equal to a wavelength of an optical signal received by the receive processing unit (42).

## Patentansprüche

1. Optische Sendeempfängerbaugruppe, umfassend:
einen Serialisierer (1);
eine mit dem Serialisierer (1) gekoppelte Hochordnungs-Modulationseinheit (2),
wobei die Hochordnungs-Modulationseinheit (2) eine Pulsamplitudenmodulation-4-bzw. PAM4-Einheit ist;
eine mit der Hochordnungs-Modulationseinheit gekoppelte Digital-Analog-Umsetzungseinheit (3); und
ein optisches Sendeempfängermodul (4) umfasst eine Sendeverarbeitungseinheit (41), eine Empfangsverarbeitungseinheit (42) und eine optische Teilungsvorrichtung (7), wobei die Sendeverarbeitungseinheit (41) und die Empfangsverarbeitungseinheit (42) jeweils mit der Digital-Analog-Umsetzungseinheit (3) gekoppelt sind und die optische Teilungsvorrichtung (7) ausgelegt ist zum Senden eines durch die Sendeverarbeitungseinheit (41) ausgegebenen ersten optischen Signals und Empfangen eines zweiten optischen Signals und Senden des zweiten optischen Signals zu der Empfangsverarbeitungseinheit (42).

2. Optische Sendeempfängerbaugruppe nach Anspruch 1, wobei die Sendeverarbeitungseinheit (41) einen Treiber (411) und einen Laser (412) umfasst;
und
der Treiber (411) elektrisch sowohl mit der Digital-Analog-Umsetzungseinheit (3) als auch mit dem Laser (412) verbunden ist.

3. Optische Sendeempfängerbaugruppe nach Anspruch 1 oder 2, wobei die Empfangsverarbeitungseinheit (42) einen Detektor (421) und einen Vorverstärker (422) umfasst; und
der Vorverstärker (422) elektrisch sowohl mit dem Detektor (421) als auch mit der Digital-Analog-Umsetzungseinheit (3) verbunden ist.

4. Optische Sendeempfängerbaugruppe nach einem der Ansprüche 1 bis 3, wobei die optische Sendeempfängerbaugruppe ferner eine Takt- und Datenwiederherstellungsschaltung (5) umfasst; und
die Takt- und Datenwiederherstellungsschaltung (5) in einer Linie zwischen dem Serialisierer (1) und einem elektrischen Signalübertragungsport der optischen Sendeempfängerbaugruppe angeordnet ist.

5. Optische Sendeempfängerbaugruppe nach einem der Ansprüche 1 bis 4, wobei die Digital-Analog-Umsetzungseinheit (3) ausgelegt ist zum Vorverarbeiten des von der Hochordnungs-Modulationseinheit (2) empfangenen seriell gemischten elektrischen Signals und eines von der Empfangsverarbeitungseinheit (42) empfangenen seriell gemischten elektrischen Signals, wobei die Vorverarbeitung mindestens Vorverzerrungsverarbeitung, Pegelbeabstandungsjustierung, Signalausgleichsverarbeitung, nichtlineare Verarbeitung und Intercode-Störungsverarbeitung umfasst.

6. Optische Sendeempfängerbaugruppe nach einem der Ansprüche 1 bis 5, wobei die optische Sendeempfängerbaugruppe ferner einen optischen Eingangs-/Ausgangsport umfasst;
die optische Teilungsvorrichtung (7) einen ersten Port (71), einen zweiten Port (72) und einen dritten Port (73) umfasst; und
die optische Teilungsvorrichtung (7) ausgelegt ist zum Senden des durch den ersten Port (71) empfangenen ersten optischen Signals zu dem optischen Eingangs-/Ausgangsport durch Verwendung des zweiten Ports (72); und ferner ausgelegt ist zum Senden des durch den optischen Eingangs-/Ausgangsport gesendeten und durch den zweiten Port (72) empfangenen zweiten optischen Signals zu der Empfangsverarbeitungseinheit (42) durch Verwendung des dritten Ports (73).

7. Optische Sendeempfängerbaugruppe nach Anspruch 6, wobei die Anzahl der Sendeverarbeitungseinheiten (41) und die Anzahl der Empfangsverarbeitungseinheiten (42) in dem optischen Sendeempfängermodul jeweils 2 ist.

8. Optische Sendeempfängerbaugruppe nach Anspruch 7, wobei das optische Sendeempfängermodul (4) eine erste Sendeverarbeitungseinheit (41), eine zweite Sendeverarbeitungseinheit (41), eine erste Empfangsverarbeitungseinheit (42) und eine zweite Empfangsverarbeitungseinheit (42) umfasst;
die erste Sendeverarbeitungseinheit (41) ausgelegt ist zum Senden eines optischen Signals einer ersten voreingestellten Wellenlänge;
die erste Empfangsverarbeitungseinheit (42) ausgelegt ist zum Empfangen eines optischen Signals einer zweiten voreingestellten Wellenlänge;
die zweite Sendeverarbeitungseinheit (41) ausgelegt ist zum Senden des optischen Signals der zweiten voreingestellten Wellenlänge; und
die zweite Empfangsverarbeitungseinheit (42) ausgelegt ist zum Empfangen des optischen Signals der ersten voreingestellten Wellenlänge.

9. Optische Sendeempfängerbaugruppe nach Anspruch 8, wobei die erste voreingestellte Wellenlänge 1270 Nanometer ist und die zweite voreingestellte Wellenlänge 1330 Nanometer ist.

10. Optische Sendeempfängerbaugruppe nach Anspruch 6, wobei die optische Sendeempfängerbaugruppe ferner ein Filter umfasst;
wobei das Filter an einem optischen Eingangsport der Empfangsverarbeitungseinheit (42) angeordnet ist.

11. Optische Sendeempfängerbaugruppe nach Anspruch 6, wobei ferner mindestens eine erste konvexe Linse (9) in einem optischen Pfad zwischen der Sendeverarbeitungseinheit (41) und der optischen Teilungsvorrichtung angeordnet ist und eine Wellenlänge der mindestens einen ersten konvexen Linse (9) gleich einer Wellenlänge eines durch die Sendeverarbeitungseinheit (41) gesendeten optischen Signals ist; und
ferner in einem optischen Pfad zwischen der Empfangsverarbeitungseinheit (42) und dem optischen Eingangs-/Ausgangsport mindestens eine zweite konvexe Linse (10) angeordnet ist und eine Wellenlänge der mindestens einen zweiten konvexen Linse (10) gleich einer Wellenlänge eines durch die Empfangsverarbeitungseinheit (42) empfangenen optischen Signals ist.

## Revendications

1. Ensemble émetteur-récepteur optique comprenant :
un sérialiseur (1) ;
une unité de modulation d'ordre supérieur (2) couplée au sérialiseur (1), l'unité de modulation d'ordre supérieur (2) étant une unité de modulation d'amplitude d'impulsions 4, PAM4 ;
une unité de conversion numérique-analogique (3) couplée à l'unité de modulation d'ordre élevé ; et
un module émetteur-récepteur optique (4) comprenant une unité de traitement d'émission (41), une unité de traitement de réception (42) et un appareil de séparation optique (7), dans lequel l'unité de traitement d'émission (41) et l'unité de traitement de réception (42) sont respectivement couplées à l'unité de conversion numérique-analogique (3), et l'appareil de séparation optique (7) est configuré pour émettre un premier signal optique émis par l'unité de traitement d'émission (41), et recevoir un second signal optique et émettre le second signal optique à l'unité de traitement de réception (42).

2. Ensemble émetteur-récepteur optique selon la revendication 1, dans lequel l'unité de traitement d'émission (41) comprend un pilote (411) et un laser (412) ; et
le pilote (411) est connecté électriquement à la fois à l'unité de conversion numérique-analogique (3) et au laser (412).

3. Ensemble émetteur-récepteur optique selon la revendication 1 ou la revendication 2, dans lequel l'unité de traitement de réception (42) comprend un détecteur (421) et un préamplificateur (422) ; et
le préamplificateur (422) est connecté électriquement à la fois au détecteur (421) et à l'unité de conversion numérique-analogique (3).

4. Ensemble émetteur-récepteur optique selon l'une quelconque des revendications 1 à 3, dans lequel l'ensemble émetteur-récepteur optique comprend en outre un circuit de récupération d'horloge et de données (5) ; et
le circuit de récupération d'horloge et de données (5) est disposé dans une ligne entre le sérialiseur (1) et un port d'émission de signaux électriques de l'ensemble émetteur-récepteur optique.

5. Ensemble émetteur-récepteur optique selon l'une quelconque des revendications 1 à 4, dans lequel l'unité de conversion numérique-analogique (3) est configurée pour prétraiter le signal électrique mélangé en série reçu de l'unité de modulation d'ordre élevé (2) et un signal électrique mélangé en série reçu de l'unité de traitement de réception (42), dans lequel le prétraitement comprend au moins un traitement de préaccentuation, un ajustement de l'espacement des niveaux, un traitement d'équilibrage des signaux, un traitement non linéaire et un traitement des interférences entre codes.

6. Ensemble émetteur-récepteur optique selon l'une quelconque des revendications 1 à 5, dans lequel l'ensemble émetteur-récepteur optique comprend en outre un port d'entrée/sortie optique ;
l'appareil de séparation optique (7) comprend un premier port (71), un deuxième port (72) et un troisième port (73) ; et
l'appareil de séparation optique (7) est configuré pour émettre le premier signal optique reçu par le premier port (71) au port d'entrée/sortie optique en utilisant le deuxième port (72) et est en outre configuré pour émettre, à l'unité de traitement de réception (42) en utilisant le troisième port (73), le second signal optique émis par le port d'entrée/sortie optique et reçu par le deuxième port (72).

7. Ensemble émetteur-récepteur optique selon la revendication 6, dans lequel la quantité d'unités de traitement d'émission (41) et la quantité d'unités de traitement de réception (42) dans le module émetteur-récepteur optique sont toutes deux de 2.

8. Ensemble émetteur-récepteur optique selon la revendication 7, dans lequel le module émetteur-récepteur optique (4) comprend une première unité de traitement d'émission (41), une seconde unité de traitement d'émission (41), une première unité de traitement de réception (42) et une seconde unité de traitement de réception (42) ;
la première unité de traitement d'émission (41) est configurée pour émettre un signal optique d'une première longueur d'onde prédéfinie ;
la première unité de traitement de réception (42) est configurée pour recevoir un signal optique d'une seconde longueur d'onde prédéfinie ;
la seconde unité de traitement d'émission (41) est configurée pour émettre le signal optique de la seconde longueur d'onde prédéfinie ; et
la seconde unité de traitement de réception (42) est configurée pour recevoir le signal optique de la première longueur d'onde prédéfinie.

9. Ensemble émetteur-récepteur optique selon la revendication 8, dans lequel la première longueur d'onde prédéfinie est de 1270 nanomètres et la seconde longueur d'onde prédéfinie est de 1330 nanomètres.

10. Ensemble émetteur-récepteur optique selon la revendication 6, dans lequel l'ensemble émetteur-récepteur optique comprend en outre un filtre ;
dans lequel le filtre est disposé sur un port d'entrée optique de l'unité de traitement de réception (42).

11. Ensemble émetteur-récepteur optique selon la revendication 6, dans lequel au moins une première lentille convexe (9) est en outre disposée sur un chemin optique entre l'unité de traitement d'émission (41) et l'appareil de séparation optique, et une longueur d'onde de l'au moins une première lentille convexe (9) est égale à une longueur d'onde d'un signal optique émis par l'unité de traitement d'émission (41) ; et au moins une deuxième lentille convexe (10) est également disposée sur un chemin optique entre l'unité de traitement de réception (42) et le port d'entrée/sortie optique, et une longueur d'onde de l'au moins une deuxième lentille convexe (10) est égale à une longueur d'onde d'un signal optique reçu par l'unité de traitement de réception (42).
